# EUROPEAN PATENT SPECIFICATION

(11) **EP 3 809 088 B1**
(45) Date of publication and mention of the grant of the patent: **13.03.2024**
(21) Application number: 19398013.3
(22) Date of filing: 18.10.2019
(51) Int. Cl.: F28F 9/02, F02B 29/04

(54) **HEAT EXCHANGER PLATE FOR IMPROVED FLOW DISTRIBUTION**
WÄRMETAUSCHERPLATTE FÜR VERBESSERTE DURCHFLUSSVERTEILUNG
PLAQUE D'ÉCHANGEUR DE CHALEUR POUR UNE MEILLEURE DISTRIBUTION D'ÉCOULEMENT

(43) Date of publication of application: 21.04.2021
(73) Proprietor: João de Deus & Filhos, S.A., 2135-113 Samora Correia (PT)
(72) Inventor: Carvalho, João, 2135-113 Samora Correia (PT); Cavaca, Helder, 2135-113 Samora Correia (PT); Neves, Luis, 2135-113 Samora Correia (PT); Costa, Ricardo, 2135-113 Samora Correia (PT)
(74) Representative: Vanzini, Christian

(56) References cited:
- EP-A- 2 458 312
- EP-A1- 3 517 879
- WO-A1-2014/201116
- DE-A1-102006 018 681
- US-A1- 2010 083 694

## Description

The present invention relates generally to heat exchangers, particularly for automotive applications.

In particular, there are known water cooled charge air coolers (WCACs) composed of a tube and fin stacking that forms a core of the WCAC. WCACs are commonly used in intake systems of internal combustion engines. In these WCACs, a water-based mixture is circulated through a jacket of the WCAC, which is connected to a water circuit. The water-based mixture passing through the jacket is used to cool down a gaseous fluid (air or gaseous mixture) conveyed by the tubes of the WCAC towards the intake system of the internal combustion engine.

Close to the engine, the charge air cooler feeds the engine runners without any intermediate hose. The cooler must guarantee that each runner is fed with a similar amount of air at a similar temperature. In this respect, it has been observed that the shape of the inlet header tank may promote an uneven distribution of air among the core tubes. Conversely, the more even the inlet air distribution is, the more performance can be extracted from the core and the more even can the air distribution be at the outlet. The problem of flow unevenness is usually dealt with by optimizing the inlet header tank shape, which can be insufficient.

Document EP 3 517 879 A1 discloses a heat exchanger with the features in the preamble of claims 1 and 3.

One aim of the invention is to provide a solution that is capable of evenly distributing the inlet fluid flow among the core tubes.

Accordingly, the invention proposes a heat exchanger having the features of claim 1 or claim 3.

According to the invention, it is therefore possible to arrange narrower restrictions at areas of the inlet core plate where the fluid flow rate is expected to be higher and moderate restrictions, or no restrictions, where the fluid flow rate is expected to be lower. By optimizing the positions of the restrictions, the fluid (e.g. air) can be evenly distributed among all the channels of the core.

The invention is mainly aimed at water cooled charge air coolers, but it can be used similarly on other fluid to fluid heat exchangers.

A preferred, but non-limiting, embodiment of the invention will now be described with reference to the attached drawings, in which:
- Figure 1 is an elevation view showing a heat exchanger according to the invention;
- Figure 2 is a perspective view showing an inlet header tank of the heat exchanger of Figure 1, along with an inlet core plate; and
- Figures 3 is a plan view of the inlet core plate.

A heat exchanger, such as for example a water charge air cooler, is shown in the drawings. The heat exchanger comprises an inlet core plate 11 and an outlet core plate 21, both of metal material, such as for example aluminium. These core plates 11 and 21 are connected in a known way to an inlet header tank 13 and to an outlet header tank 23, respectively, in a fluid-tight manner. The header tank 13 and 23 may be of polymeric material.

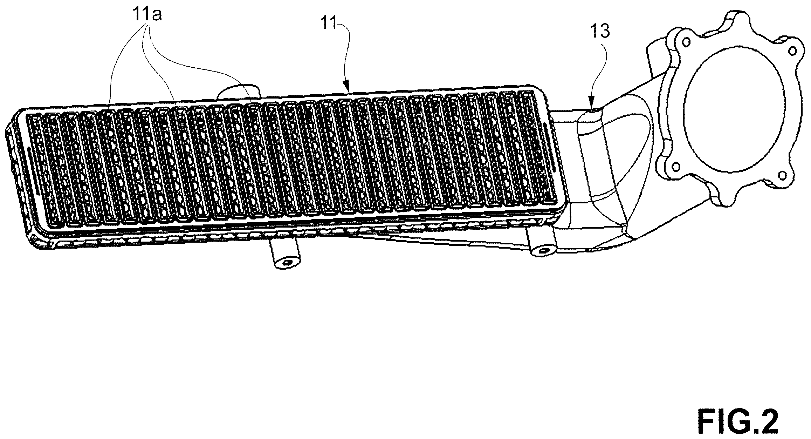

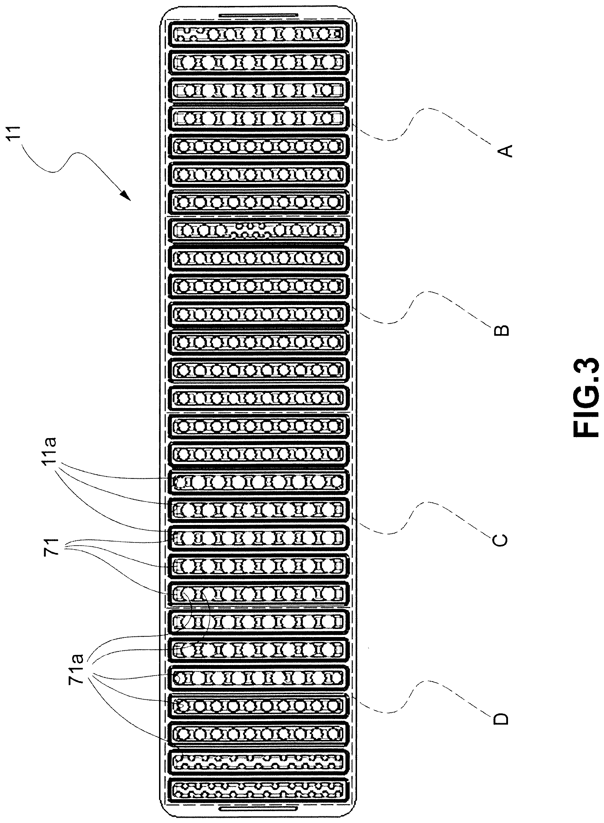

The heat exchanger 1 further comprises a core comprising a plurality of parallel flat tubes (not shown) extending between the core plates 11 and 21. The tubes are of metal material, such as for example aluminium. Each tube has opposite ends inserted into openings or slots

formed in one or the other of the core plates 11, 21, respectively. Each tube 31 has an approximately rectangular cross-section, and comprises a pair of opposite long sidewalls and a pair of opposite short sidewalls which interconnect the long sidewalls and are shorter than the long sidewalls. Correspondingly, the openings formed through the core plates 11 and 21 are approximately rectangular shaped. In Figures 2 and 3 the inlet core plate 11 is shown, and the respective openings are designated with 11a.

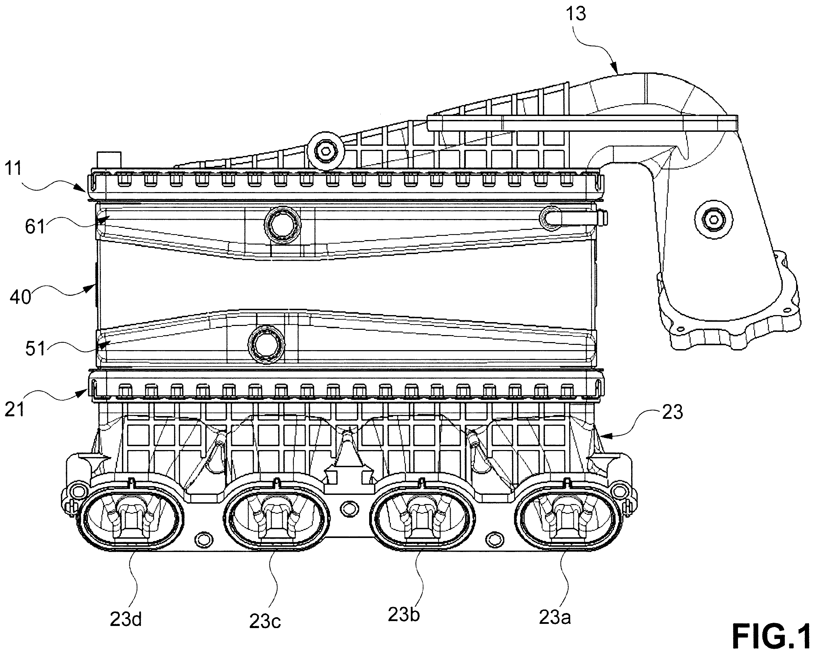

A first fluid, particularly a gaseous fluid such as, for example, air or a gaseous mixture, is designed to flow from the inlet header tank 13 of the heat exchanger, through the fluid connections between the inlet core plate 11 and core tubes, to the outlet header tank 23 of the heat exchanger, through the fluid connections between the core tubes and outlet core plate 21. Through the inlet and outlet header tanks, the heat exchanger can be connected to a fluid circuit for the first fluid (not shown), comprising for example an intake system of an internal combustion engine. In particular, the outlet header tank 23 shown in Figure 1 is configured to be directly connected to the engine cylinders. In particular, the outlet header tank 23 comprises a plurality of runners (four runners in Figure 1) respectively designated with 23a, 23b, 23c, 23d, and configured to be connected to respective cylinders of the engine.

A second fluid, particularly a liquid coolant such as, for example, water or a water-based mixture, is designed to flow around the core and through gaps between the core tubes, and exchange heat with the first fluid flowing into the tubes.

The heat exchanger further comprises a jacket 40 of metal material, such as for example aluminium. The jacket 40 is connected to the core plates 11 and 21 in a fluid-tight manner and defines with the core plates 11 and 21 an inner volume for receiving/conveying the second fluid. The core tubes are placed within this inner volume formed by the jacket 40 and the core plates 11 and 21.

The heat exchanger further comprises an inlet fluid channel 51 and an outlet fluid channel 61 for conveying the second fluid to and from the inner volume formed by the jacket 40 along with the core plates 11, 21. Both fluid channels 51, 61 are of metal material, such as for example aluminium. Each fluid channel 51, 61 is joined to a wall of the jacket 40.

Each fluid channel 51, 61 is in fluid communication with the inner volume of the jacket 40 through a respective opening (not shown) formed through the jacket 40.

The inlet fluid channel 51 and the outlet fluid channel 61 are configured to connect the heat exchanger to a fluid circuit for the second fluid (not shown), such as for example a liquid coolant circuit.

Figure 2 shows the inlet header tank 13 coupled to the inlet core plate 11, while Figure 3 shows the inlet core plate 11 in plan view. According to the invention, fluid flow restricting means are provided on the inlet core plate 11. These fluid flow restricting means place differentiated restrictions 71 on the openings 11a of the inlet core plate 11 in such a way that the restrictions 71 cooperate with the openings 11a of the inlet core plate 11 to define fluid flow passages having different flow cross-sections. The restrictions 71 are formed as apertured portions of material that partially obstruct the respective openings 11a. As shown in Figure 3, through these portions of material there are formed holes 71a having different cross-sections.

The restrictions 71 may be formed directly on the inlet core plate 11. According to another embodiment, a flow distributing plate is arranged on the inlet core plate 11, between the inlet header tank 13 and the inlet core plate 11. In this embodiment, the restrictions 71 may be formed in the flow distributing plate and are arranged in such a way to be positioned in front of the openings 11a of the inlet core plate 11. Therefore, the holes 71a of different flow cross-sections are positioned in front of the openings 11a of the inlet core plate 11. In the embodiment in which the restrictions 71 are formed on a flow distributing plate distinct from the inlet core plate 11, a peripheral portion of the flow distributing plate is formed in one piece with a gasket interposed between the inlet core plate 11 and the inlet header tank 13. According to an example not according to the invention, a peripheral portion of the flow distributing plate may be formed in one piece with the inlet header tank 13.

Dashed lines A, B, C, D in Figure 3 outline respective sections of the inlet core plate 11 that are arranged in front of the runners 23a, 23b, 23c, 23d of the header outlet tank 23, respectively. In other words, each area A, B, C, D with its openings 11a and respective core tubes is arranged in front of a respective runner 23a, 23b, 23c, 23d of the header outlet tank 23. Narrower restrictions may be positioned at areas of the inlet core plate 11 where the fluid flow rate is expected to be higher and moderate restrictions, or no restrictions, may be positioned where the fluid flow rate is expected to be lower. By optimizing the positions and flow cross-sections of the restrictions, the air can be evenly distributed among all the channels of the core and, therefore, among the runners 23a-23d.

## Claims

1. A heat exchanger comprising:
a plurality of parallel tubes (31) for conveying a fluid,
inlet and outlet core plates (11, 21), each having a plurality of openings into which respective ends of the tubes are inserted in a fluid-tight manner, and
inlet and outlet header tanks (13, 23) joined to the inlet and outlet core plates (11, 21), respectively, in a fluid-tight manner, said inlet and outlet header tanks cooperating with the inlet and outlet core plates to form a fluid inlet chamber and a fluid outlet chamber, respectively,
wherein fluid flow restricting means are provided on said inlet core plate (11), said fluid flow restricting means placing differentiated restrictions (71) in front of the openings (11a) of the inlet core plate (11) in such a way that said restrictions (71) cooperate with the openings (11) of the inlet core plate (11a) to define fluid flow passages having different flow cross-sections,
wherein said flow restricting means comprise a flow distributing plate arranged on said inlet core plate, in said flow distributing plate there being formed a plurality of holes (71a) having different flow cross-sections, said holes being positioned in front of the openings (11a) of the inlet core plate (11),
**characterized in that** a peripheral portion of the flow distributing plate is formed in one piece with a gasket interposed between the inlet core plate (11) and the inlet header tank (13).

2. A heat exchanger according to claim 1, wherein said restrictions (71) are formed as apertured portions of material that partially obstruct the respective openings (11a) of the inlet core plate (11).

3. A heat exchanger comprising:
a plurality of parallel tubes (31) for conveying a fluid,
inlet and outlet core plates (11, 21), each having a plurality of openings into which respective ends of the tubes are inserted in a fluid-tight manner, and
inlet and outlet header tanks (13, 23) joined to the inlet and outlet core plates (11, 21), respectively, in a fluid-tight manner, said inlet and outlet header tanks cooperating with the inlet and outlet core plates to form a fluid inlet chamber and a fluid outlet chamber, respectively,
wherein fluid flow restricting means are provided on said inlet core plate (11), said fluid flow restricting means placing differentiated restrictions (71) in front of the openings (11a) of the inlet core plate (11) in such a way that said restrictions (71) cooperate with the openings (11) of the inlet core plate (11a) to define fluid flow passages having different flow cross-sections,
**characterized in that** said flow restricting means are formed as holes (71a) having different flow cross-sections and being formed through the inlet core plate (11).

## Patentansprüche

1. Wärmetauscher, aufweisend:
eine Mehrzahl von parallelen Röhren (31) zum Transportieren einer Flüssigkeit,
Einlass- und Auslasskernplatten (11, 21), die jeweils eine Mehrzahl von Öffnungen aufweisen, in die jeweilige Enden der Röhren in flüssigkeitsdichter Weise eingeführt werden, und
Einlass- und Auslass-Sammeltanks (13, 23), die mit den Einlass- bzw. Auslasskernplatten (11, 21) in flüssigkeitsdichter Weise verbunden sind, wobei die Einlass- und Auslass-Sammeltanks mit den Einlass- und Auslasskernplatten zusammenwirken, um eine Flüssigkeitseinlasskammer bzw. eine Flüssigkeitsauslasskammer zu bilden,
wobei Vorrichtungen zum Begrenzen des Flüssigkeitsstroms auf der Einlasskernplatte (11) vorgesehen sind, wobei die Vorrichtungen zum Begrenzen des Flüssigkeitsstroms vor den Öffnungen (11a) der Einlasskernplatte (11) differenzierte Begrenzungen (71) derart platzieren, dass die Begrenzungen (71) mit den Öffnungen (11a) der Einlasskernplatte (11) derart zusammenwirken, dass sie Flüssigkeitsströmungskanäle mit unterschiedlichen Strömungsquerschnitten definieren,
wobei die Strömungsbegrenzungsvorrichtungen eine auf der Einlasskernplatte angeordnete Strömungsverteilerplatte aufweisen, wobei auf der Strömungsverteilerplatte eine Mehrzahl von Öffnungen (71a) mit unterschiedlichen Strömungsquerschnitten ausgebildet sind, wobei die Öffnungen vor den Öffnungen (11a) der Einlasskernplatte (11) angeordnet sind,
**dadurch gekennzeichnet, dass** ein peripherer Abschnitt der Strömungsverteilerplatte in einem Stück mit einer zwischen der Einlasskernplatte (11) und dem Einlass-Sammeltank (13) befindlichen Dichtung ausgebildet ist.

2. Wärmetauscher nach Anspruch 1, wobei die Begrenzungen (71) als mit Öffnungen versehene Abschnitte aus einem Material, das die jeweiligen Öffnungen (11a) der Einlasskernplatte (11) teilweise versperrt, ausgebildet sind.

3. Wärmetauscher, aufweisend:
eine Mehrzahl von parallelen Röhren (31) zum Transportieren einer Flüssigkeit,
Einlass- und Auslasskernplatten (11, 21), die jeweils eine Mehrzahl von Öffnungen aufweisen, in die jeweilige Enden der Röhren in flüssigkeitsdichter Weise eingeführt werden, und
Einlass- und Auslass-Sammeltanks (13, 23), die mit den Einlass- bzw. Auslasskernplatten (11, 21) in flüssigkeitsdichter Weise verbunden sind, wobei die Einlass- und Auslass-Sammeltanks mit den Einlass- und Auslasskernplatten zusammenwirken, um eine Flüssigkeitseinlasskammer bzw. eine Flüssigkeitsauslasskammer zu bilden,
wobei Vorrichtungen zum Begrenzen des Flüssigkeitsstroms auf der Einlasskernplatte (11) vorgesehen sind, wobei die Vorrichtungen zum Begrenzen des Flüssigkeitsstroms vor den Öffnungen (11a) der Einlasskernplatte (11) differenzierte Begrenzungen (71) derart platzieren, dass die Begrenzungen (71) mit den Öffnungen (11a) der Einlasskernplatte (11) derart zusammenwirken, dass sie Flüssigkeitsströmungskanäle mit unterschiedlichen Strömungsquerschnitten definieren,
**dadurch gekennzeichnet, dass** die Strömungsbegrenzungsvorrichtungen als Öffnungen (71a) ausgebildet sind, die unterschiedliche Strömungsquerschnitte aufweisen und durch die Einlasskernplatte (11) hindurch ausgebildet sind.

## Revendications

1. Échangeur de chaleur comprenant :
une pluralité de tubes parallèles (31) pour transporter un fluide,
des plaques centrales d'entrée et de sortie (11, 21), chacune présentant une pluralité d'ouvertures dans lesquelles des extrémités respectives des tubes sont insérées de manière étanche aux fluides, et
des réservoirs collecteurs d'entrée et de sortie (13, 23) reliés aux plaques centrales d'entrée et de sortie (11, 21), respectivement, de manière étanche aux fluides, lesdits réservoirs collecteurs d'entrée et de sortie coopérant avec les plaques centrales d'entrée et de sortie pour former une chambre d'entrée de fluide et une chambre de sortie de fluide, respectivement,
dans lequel des moyens de restriction d'écoulement de fluide sont fournis sur ladite plaque centrale d'entrée (11), lesdits moyens de restriction d'écoulement de fluide créant des restrictions différenciées (71) devant les ouvertures (11a) de la plaque centrale d'entrée (11) de sorte que lesdites restrictions (71) coopèrent avec les ouvertures (11) de la plaque centrale d'entrée (11a) pour définir des passages d'écoulement de fluide présentant différentes sections transversales d'écoulement,
dans lequel lesdits moyens de restriction d'écoulement comprennent une plaque de répartition d'écoulement agencée sur ladite plaque centrale d'entrée, dans ladite plaque de répartition d'écoulement étant formés une pluralité de trous (71a) présentant différentes sections transversales d'écoulement, lesdits trous étant positionnés devant les ouvertures (11a) de la plaque centrale d'entrée (11),
**caractérisé en ce qu'**une partie périphérique de la plaque de répartition d'écoulement est formée d'un seul tenant avec un joint d'étanchéité interposé entre la plaque centrale d'entrée (11) et le réservoir collecteur d'entrée (13).

2. Échangeur de chaleur selon la revendication 1, dans lequel lesdites restrictions (71) forment des parties ajourées de matériau qui obstruent partiellement les ouvertures respectives (11a) de la plaque centrale d'entrée (11).

3. Échangeur de chaleur comprenant :
une pluralité de tubes parallèles (31) pour transporter un fluide,
des plaques centrales d'entrée et de sortie (11, 21), chacune présentant une pluralité d'ouvertures dans lesquelles des extrémités respectives des tubes sont insérées de manière étanche aux fluides, et
des réservoirs collecteurs d'entrée et de sortie (13, 23) reliés aux plaques centrales d'entrée et de sortie (11, 21), respectivement, de manière étanche aux fluides, lesdits réservoirs collecteurs d'entrée et de sortie coopérant avec les plaques centrales d'entrée et de sortie pour former une chambre d'entrée de fluide et une chambre de sortie de fluide, respectivement,
dans lequel des moyens de restriction d'écoulement de fluide sont fournis sur ladite plaque centrale d'entrée (11), lesdits moyens de restriction d'écoulement de fluide créant des restrictions différenciées (71) devant les ouvertures (11a) de la plaque centrale d'entrée (11) de sorte que lesdites restrictions (71) coopèrent avec les ouvertures (11) de la plaque centrale d'entrée (11a) pour définir des passages d'écoulement de fluide présentant différentes sections transversales d'écoulement,
**caractérisé en ce que** lesdits moyens de restriction d'écoulement forment des trous (71a) présentant différentes sections transversales d'écoulement et étant formés à travers la plaque centrale d'entrée (11).
